# FASCICULE DE BREVET EUROPEEN

(11) **EP 1 510 377 B1**
(45) Date de publication et mention de la délivrance du brevet: **12.12.2007**
(21) Numéro de dépôt: 04013749.9
(22) Date de dépôt: 11.06.2004
(51) Int. Cl.: B60H 1/00

(54) **Dispositif de chauffage-ventilation et/ou climatisation comprenant un volet de réglage d'air logé dans un boitier**
Heizungs-Lüftungs- und/oder Klimaanlage mit einer in einem Gehäuse angeordneten Luftregelklappe
Device for heating-ventilating and/or air conditioning comprising a damper door for controlling an airflow, arranged in a housing

(30) Priorité: 25.08.2003 FR 0310140
(43) Date de publication de la demande: 02.03.2005
(73) Titulaire: VALEO SYSTEMES THERMIQUES, 78320 Le Mesnil Saint-Denis (FR)
(72) Inventeur: Beck, Patrick, 28210 Senantes (FR)

(56) Documents cités:
- DE-A- 19 530 003
- US-A- 5 129 687

## Description

L'invention concerne un dispositif de chauffage-ventilation et/ou climatisation, notamment pour véhicule automobile.

On connaît déjà des dispositifs de ce genre qui comprennent un volet de réglage d'air logé dans un boîtier, le volet présentant un corps solidaire d'un arbre de rotation, et le boîtier présentant une première paroi et une deuxième paroi opposées qui sont traversées par l'arbre du volet et entre lesquelles s'étend le corps du volet.

Le boîtier est traversé par un flux d'air qui passe entre la première paroi et la deuxième paroi, le volet permettant de régler le débit et/ou la direction d'écoulement du flux d'air en fonction de sa position angulaire.

Ce volet de réglage peut être réalisé sous différentes formes, notamment du type drapeau, du type papillon, du type tambour, etc.

Généralement le corps du volet est muni d'au moins un joint qui assure l'étanchéité avec la première paroi et la deuxième paroi précitée, et éventuellement avec d'autres parois du boîtier.

Ces volets de réglage ont pour inconvénient d'engendrer des jeux dans la direction axiale et/ou dans la direction radiale en raison des dispersions dues à la fabrication, et aussi en raison de l'usure.

Ces jeux sont susceptibles d'entraîner des fuites d'air et des bruits préjudiciables au bon fonctionnement du dispositif et au confort des passagers du véhicule automobile équipé du dispositif.

Même si le joint d'étanchéité peut assurer au moins en partie une compensation du jeu axial et/ou du jeu radial, ce jeu ne peut être totalement absorbé.

US 5 129 687 divulgue un dispositif de climatisation selon le préambule de la revendication 1.

Jusqu'à présent, il n'existe aucune solution satisfaisante pour permettre de maîtriser les jeux lors de l'assemblage d'un volet rotatif dans un boîtier d'un dispositif du type précité.

L'invention a notamment pour but de surmonter les inconvénients précités.

C'est en particulier un but de l'invention de procurer un dispositif de chauffage-ventilation et/ou climatisation, du type défini en introduction, qui comporte des moyens simples permettant de maîtriser les jeux lors de l'assemblage du volet et du boîtier.

C'est encore un but de l'invention de proposer un tel dispositif qui supprime les problèmes d'acoustique dûs à de tels jeux.

C'est encore un autre but de l'invention de procurer un tel dispositif qui convient essentiellement pour les appareils de chauffage-ventilation et/ou climatisation des véhicules automobiles.

L'invention propose à cet effet un dispositif selon la revendication 1, dans lequel le volet est muni d'au moins une languette élastique agencée pour prendre appui contre au moins une zone de contact de la première paroi et solliciter le corps du volet dans une direction opposée à la force exercée par la languette élastique sur la zone de contact.

Cette languette élastique, encore appelée patte souple, permet de maintenir en permanence le corps du volet en contact avec le boîtier, par exemple avec la deuxième paroi du boîtier et/ou une autre paroi qui s'étend entre la première paroi et la deuxième paroi.

Il en résulte que les jeux existants au montage, qui peuvent être axiaux et/ou radiaux, sont compensés en permanence, ce qui permet de maîtriser ces jeux et de supprimer les fuites d'air et bruits inhérents à de tels jeux.

Cette languette élastique assure d'autres fonctions que celles de maîtriser le jeu d'assemblage.

Ainsi, il est prévu que la zone de contact de la première paroi comprenne des moyens d'indexage aptes à coopérer avec la languette élastique pour maintenir le volet dans des positions angulaires définies.

Dans une forme de réalisation de l'invention, la languette élastique est agencée pour prendre appui contre la zone de contact de la première paroi et solliciter le corps du volet contre la deuxième paroi dans une direction axiale. Cet agencement permet ainsi de compenser les jeux axiaux, c'est-à-dire dans la direction de l'axe de rotation du volet.

Dans une autre forme de réalisation de l'invention, la languette élastique est agencée pour prendre appui contre la zone de contact de la première paroi et solliciter le corps du volet dans une direction radiale. Cet agencement permet ainsi de compenser les jeux radiaux, c'est-à-dire dans une direction perpendiculaire à la direction de l'axe de rotation du volet.

Il est envisageable d'équiper le volet de plusieurs languettes et d'absorber ainsi des jeux dans des directions différentes.
Dans une forme de réalisation préférée de l'invention, la languette élastique comprend un bras s'étendant radialement par rapport à l'arbre du volet.

Ce bras peut être muni d'une extrémité recourbée, qui vient appuyer contre la zone de contact de la première paroi.

Mais le bras peut aussi être muni d'une extrémité non recourbée, c'est-à-dire s'étendant dans le prolongement du bras, qui vient s'appuyer contre la zone de contact de la première paroi.

De façon avantageuse, le bras est solidaire d'un moyeu formé à la jonction du corps et de l'arbre du volet.

Dans une forme de réalisation de l'invention, la languette élastique est formée d'une seule pièce avec le volet par moulage d'une matière plastique.

Dans une autre forme de réalisation, la languette élastique est formée au moins en partie d'une seule pièce avec le volet par moulage d'une matière plastique.

En ce dernier cas, il est avantageux que la languette élastique comprenne une partie formée d'une seule pièce avec le volet et une partie surmoulée.

Cette partie surmoulée pourra être réalisée dans un matériau différent et procurer un meilleur effet élastique.

Ainsi, on peut prévoir que la partie surmoulée comprenne l'extrémité recourbée de la languette.

Le corps du volet est avantageusement entouré d'un joint assurant l'étanchéité avec la première paroi et la deuxième paroi.

Dans la description qui suit, faite seulement à titre d'exemple, on se réfère aux dessins annexés, sur lesquels :
- la figure 1 est une vue schématique en coupe d'un boîtier d'un dispositif de chauffage-ventilation et/ou climatisation dans lequel est logé un volet de réglage d'air selon l'invention, réalisé ici sous la forme d'un volet du type papillon ;
- la figure 2 est une vue partielle en perspective d'une extrémité d'un volet équipé d'une languette élastique selon l'invention ;
- la figure 3 est une vue partielle en perspective montrant l'intérieur du boîtier et plus particulièrement la coopération de la languette élastique avec une paroi du boîtier ;
- la figure 4 illustre la coopération d'une languette élastique avec des moyens d'indexage prévus sur une paroi de boîtier ;
- la figure 5 est une vue schématique partielle en coupe analogue à la figure 1 dans une autre forme de réalisation de l'invention ; et
- la figure 6 illustre la coopération d'une languette élastique avec des moyens d'indexage dans la forme de réalisation de la figure 5.

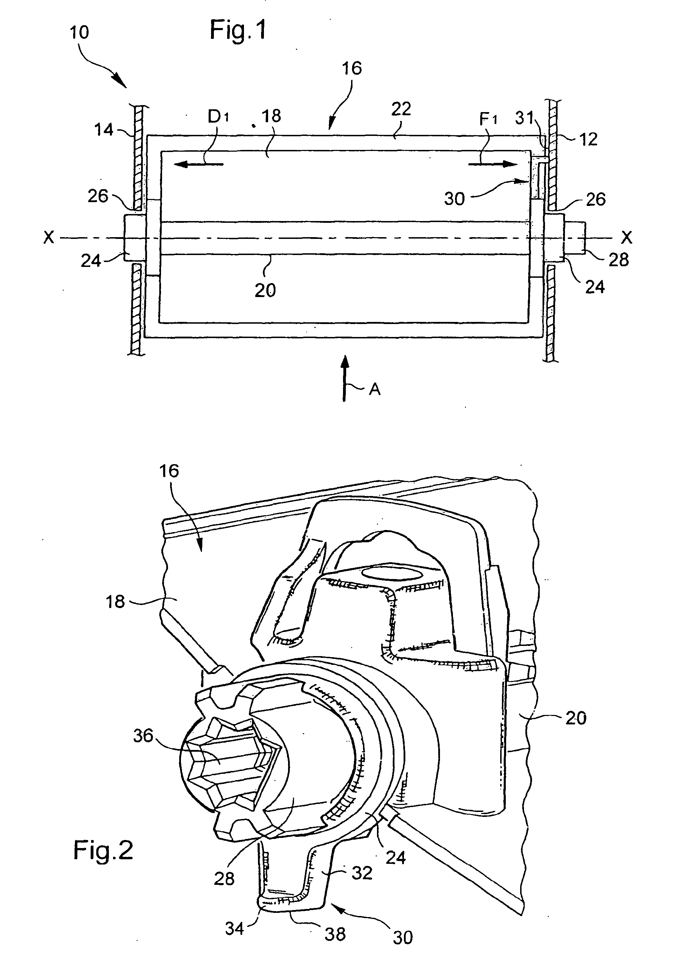

On se réfère d'abord à la figure 1 qui représente de façon schématique un boîtier 10 faisant partie d'un dispositif de chauffage-ventilation et/ou climatisation, dans l'exemple destiné à un véhicule automobile. Ce boîtier est limité notamment par une première paroi 12 et une deuxième paroi 14 sensiblement parallèles entre elles et mutuellement opposées.

Ces deux parois, éventuellement en combinaison avec au moins une autre paroi (non représentée), délimitent un passage destiné à être traversé par un flux d'air comme représenté par la flèche A. Ce flux d'air peut être notamment un flux d'air à température réglée destinée à être envoyé dans l'habitacle d'un véhicule automobile.

A l'intérieur du boîtier 10 est logé un volet de réglage d'air 16 qui présente un corps 18 solidaire d'un arbre de rotation 20, lequel définit un axe de rotation XX. Le volet 16 est ici un volet du type papillon, le corps 18 du volet comportant deux ailes de forme générale rectangulaire s'étendant de part et d'autre de l'arbre 20. Le corps 18 du volet est entouré d'un joint d'étanchéité 22 qui garantit l'étanchéité, notamment avec les parois 12 et 14 du boîtier, et éventuellement avec une autre paroi du boîtier.

A ses deux extrémités, le volet 16 comprend deux moyeux 24 passant à travers des ouvertures respectives 26 des parois 12 et 14. L'un des moyeux 24 se termine par un embout 28 destiné à être relié à un mécanisme d'entraînement (non représenté).

Un tel volet peut être placé dans une pluralité de positions angulaires pour ajuster le débit du flux d'air dans le boîtier et/ou orienter la direction du flux d'air.

Lors de l'assemblage du volet dans le boîtier, il existe nécessairement un jeu axial et/ou radial dû à la fabrication, et ce jeu peut augmenter ultérieurement en raison notamment de problèmes d'usure.

Pour compenser ce jeu, l'invention prévoit que le volet 16 est muni d'une languette élastique 30 agencée pour prendre appui contre une zone de contact 31 de la première paroi 12 dans la direction axiale XX. Cette zone de contact est ici formée directement sur la face interne de la paroi 12 qui est en vis-à-vis de la paroi 14.

La languette élastique 30 exerce une force d'appui F1 dans une direction parallèle à l'axe XX et dans le sens gauche-droite sur la figure 1. Il en résulte une force de réaction qui tend à solliciter le corps 18 du volet dans une direction D1 opposée à la force F1. Le corps 18 du volet est ainsi sollicité contre la paroi 14, supprimant ainsi tout jeu axial entre la paroi 14 et le moyeu 24 qui la traverse.

On se réfère maintenant à la figure 2 pour décrire plus particulièrement une forme de réalisation de la languette élastique 30. Comme on le voit à la figure 2, la languette élastique 30 comprend un bras 32 s'étendant radialement par rapport à l'arbre et muni d'une extrémité recourbée 34. Le bras 32 est solidaire du moyeu 24, lequel moyeu est formé à la jonction du corps 18 et de l'arbre 20 du volet.

On aperçoit également sur la figure 2 l'embout 28, lequel comporte un trou borgne 36 définissant des cannelures pour recevoir un arbre cannelé (non représenté) de forme conjugué servant à l'entraînement du volet autour de l'axe de rotation XX.

Le bras 32 et l'extrémité recourbée 34 peuvent être réalisés d'une seule pièce avec le volet, par moulage d'une matière plastique.

Il est avantageux aussi, comme montré à la figure 2, que l'extrémité 34 fasse partie d'une partie surmoulée 38 qui est appliquée par surmoulage sur le bras 32. Ceci permet d'obtenir un effet élastique plus important que celui dû au simple bras 32.

En d'autres termes, la partie surmoulée 38 est constituée au moins en partie de l'extrémité recourbée 34. Dans l'exemple, elle est surmoulée aussi sur la plus grande partie du bras 32.

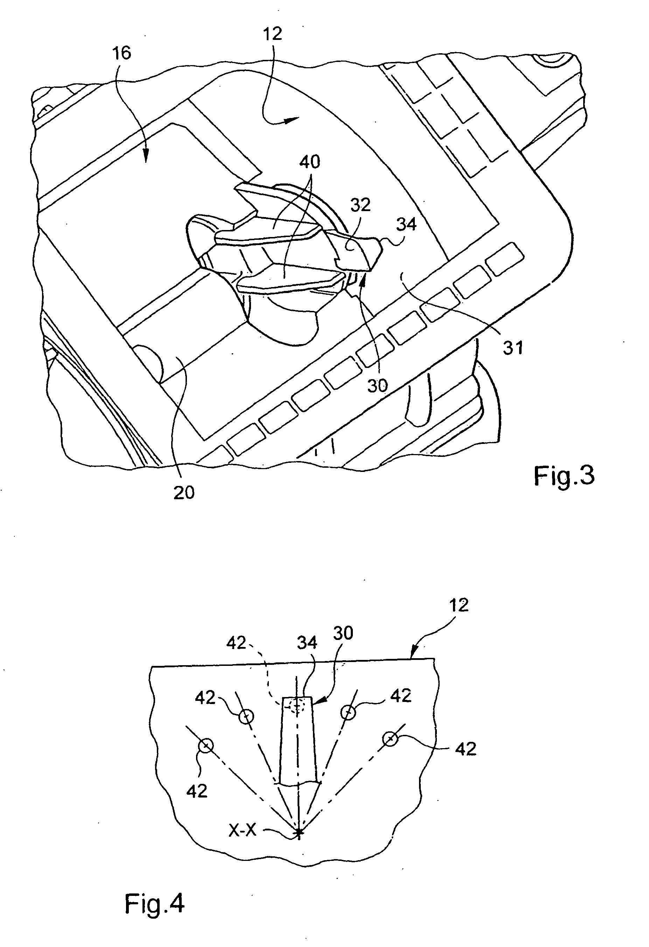

La figure 3 montre comment la languette élastique 30 vient appuyer contre la zone de contact 31 de la paroi 12 du boîtier 10. On voit également sur cette figure que le bras 32 est relié à deux éléments 40 formant contre-appui qui sont également reliés à l'arbre du volet. Il en résulte un renforcement du bras 32 et, par conséquent, de la languette élastique 30.

Dans la forme de réalisation de la figure 4, la paroi 12 est munie intérieurement de plusieurs creux ou encoches 42 situés à égale distance de l'axe de rotation XX et dans des positions angulaires définies. Ces creux 42 forment des crans destinés à recevoir l'extrémité recourbée 34 de la languette élastique 30 dans une multiplicité de positions angulaires choisies. Ainsi, dans ce dernier cas, la languette élastique assure non seulement une compensation du jeu du volet, mais aussi une fonction d'indexation des positions du volet.

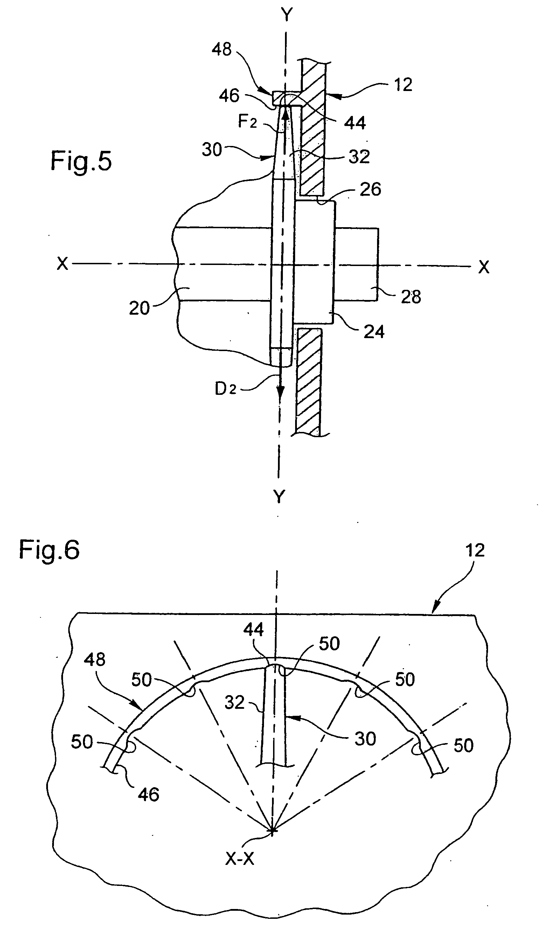

La forme de réalisation de la figure 5 s'apparente à celle de la figure 1 et les éléments communs sont désignés par les mêmes références numériques. Toutefois, La languette élastique 30 possède ici une extrémité 44, non pas recourbée comme dans la forme de réalisation précédente, mais s'étendant dans le prolongement du bras 32.

La languette élastique 30 est agencée pour prendre appui contre une zone de contact 46 de la première paroi 12, qui est formée par la face interne d'une nervure cylindrique 48 formée en saillie sur la paroi 12 et s'étendant vers l'intérieur du boîtier. La nervure cylindrique 48 est réalisée monobloc avec la paroi 12, par exemple par moulage d'une matière plastique, et elle est centrée sur l'axe XX. Elle peut constituer un cercle complet ou un arc de cercle.

Il en résulte que la languette élastique 30 exerce une force d'appui F2 dans une direction radiale YY, perpendiculaire à l'axe XX, et dans le sens du bas vers le haut sur la figure 5. Cela produit une force de réaction qui tend à solliciter le corps 18 du volet dans une direction D2 opposée à la force F2. Le corps 18 du volet est ainsi sollicité dans une direction radiale, supprimant ainsi tout jeu radial entre le corps du volet et le boîtier.

Dans la forme de réalisation de la figure 6, la zone de contact 46 (face interne de la nervure 48 de la figure 5) est munie intérieurement de plusieurs creux ou encoches 50 situés à égale distance de l'axe de rotation XX et dans des positions angulaires définies. Ces creux 50 forment des crans destinés à recevoir l'extrémité 44 de la languette élastique 30 dans une multiplicité de positions angulaires choisies. Ainsi, comme dans le cas de la figure 4, la languette élastique assure non seulement une compensation du jeu du volet, mais aussi une fonction d'indexation des positions du volet.

Bien que l'invention ait été décrite en référence à un volet du type papillon, elle peut s'appliquer à d'autres types de volets, notamment à des volets du type drapeau, du type tambour, etc.

En outre le volet peut être équipé de plusieurs languettes coopérant avec des zones de contact respectives pour compenser différent types de jeux.
L'invention s'applique tout particulièrement à des dispositifs de chauffage-ventilation et/ou climatisation de l'habitacle des véhicules automobiles.

## Revendications

1. Dispositif de chauffage-ventilation et/ou climatisation, notamment pour véhicule automobile, comprenant un volet de réglage d'air (16) logé dans un boîtier (10), le volet présentant un corps (18) solidaire d'un arbre de rotation (20), et le boîtier (10) présentant une première paroi (12) et une deuxième paroi (14) opposées entre lesquelles s'étend le corps (18) du volet, le volet (16) étant muni d'au moins une languette élastique (30) agencée pour prendre appui contre au moins une zone de contact (31; 46) de la première paroi (12) et solliciter le corps (18) du volet dans une direction (D1 ; D2) opposée à la force (F1 ; F2) exercée par la languette élastique sur la zone de contact, **caractérisé en ce que** les parois (12,14) sont traversées par l'arbre (20) du volet, la zone de contact (31,46) de la première paroi (12) comprenant des moyens d'indexage (42 ; 50) aptes à coopérer avec la languette élastique (30) pour maintenir le volet (16) dans des positions angulaires définies.

2. Dispositif selon la revendication 1, **caractérisé en ce que** la languette élastique (30) est agencée pour prendre appui contre la zone de contact (31) de la première paroi (12) et solliciter le corps (18) du volet contre la deuxième paroi (14) dans une direction axiale (XX).

3. Dispositif selon l'une des revendications 1 et 2, **caractérisé en ce que** la languette élastique (30) est agencée pour prendre appui contre la zone de contact (46) de la première paroi (12) et solliciter le corps (18) du volet dans une direction radiale (YY).

4. Dispositif selon l'une des revendications 1 à 3, **caractérisé en ce que** la languette élastique (30) comprend un bras (32) s'étendant radialement par rapport à l'arbre (20).

5. Dispositif selon la revendication 4, **caractérisé en ce que** le bras (32) de la languette élastique (30) est muni d'une extrémité recourbée (34).

6. Dispositif selon l'une des revendications 1 à 5, **caractérisé en ce que** le bras (32) est solidaire d'un moyeu (24) formé à la jonction du corps (18) et de l'arbre (20) du volet.

7. Dispositif selon l'une des revendications 1 à 6, **caractérisé en ce que** la languette élastique (30) est formée d'une seule pièce avec le volet (16) par moulage d'une matière plastique.

8. Dispositif selon l'une des revendications 1 à 6, **caractérisé en ce que** la languette élastique (30) est formée au moins en partie d'une seule pièce avec le volet (16) par moulage d'une matière plastique.

9. Dispositif selon la revendication 8, **caractérisé en ce que** la languette élastique (30) comprend une partie formée d'une seule pièce avec le volet et une partie surmoulée (38).

10. Dispositif selon les revendications 5 et 9, prises en combinaison, **caractérisé en ce que** la partie surmoulée (38) comprend l'extrémité recourbée (34) de la languette.

11. Dispositif selon l'une des revendications 1 à 10, **caractérisé en ce que** le corps (18) du volet est entouré d'un joint (22) assurant l'étanchéité avec la première paroi (12) et la deuxième paroi (14).

## Claims

1. Heating and ventilating and/or air conditioning device especially for automobile vehicles, comprising an air adjustment flap (16) located in a housing (10) wherein the flap has a body (18) attached to a rotating spindle (20) and the housing (10) has a first wall (12) and a second wall (14) opposite one another between which extends the body (18) of the flap, wherein the flap (16) is equipped with at least one elastic strip (30) fitted so that it presses against at least one zone of contact (31; 46) of the first wall (12) and solicits the body (18) of the flap in one direction (D1; D2) opposite to the force (Fl; F2) exerted by the elastic strip on the zone of contact, **characterised in that** the walls (12; 14) are passed through by the spindle (20) of the flap the zone of contact (31; 46) of the first wall 12 comprising indexing means (42; 50) capable of cooperating with the elastic strip (30) to maintain the flap (16) in defined angular positions.

2. Device of claim 1, **characterised in that** the elastic strip (30) is fitted so that it presses against the zone of contact (31) of the first wall (12) and solicits the body (18) of the flap against the second wall (14) in an axial direction (XX).

3. Device of any of claims 1 or 2, **characterised in that** the elastic strip (30) is fitted so that it presses against the zone of contact (46) of the first wall (12) and solicits the body (18) of the flap in a radial direction (YY).

4. Device of any of claims 1 to 3, **characterised in that** the elastic strip (30) comprises an arm (32) extending radially with respect to the spindle 20).

5. Device of claim 4, **characterised in that** the arm (32) of the elastic strip (30) is equipped with a curved end (34).

6. Device of any of claims 1 to 5, **characterised in that** the arm (32) is attached to a hub (24) formed at the junction of the body (18) and the spindle (20) of the flap.

7. Device of any of claims 1 to 7, **characterised in that** the elastic strip (30) is formed in a single part with the flap (16) by moulding of a plastic material.

8. Device of any of claims 1 to 6, **characterised in that** the elastic strip (30) is formed at least partially in a single part with the flap (16) by moulding of a plastic material.

9. Device of claim 8, **characterised in that** the elastic strip (30) comprises one part formed in a single part with the flap and a moulded on part (38).

10. Device of any of claims 5 to 9, considered together, **characterised in that** the moulded on part (38) comprises the curved end (34) of the strip.

11. Device of any of claims 1 to 10, **characterised in that** the body (18) of the flap is surrounded by a seal (22) which creates a seal with the first wall (12) and the second wall (14).

## Patentansprüche

1. Heizungs- und/oder Belüftungseinrichtung, vor allem für Kraftfahrzeuge, bestehend aus einer Luftregelungsklappe (16), welche in einem Gehäuse (10) gelagert ist, wobei die Klappe ein mit der Drehwelle (20) formschlüssig verbundenes Hauptstück (18) aufweist, und das Gehäuse (10) eine erste Wand (12) und eine zweite entgegengesetzte Wand (14) aufweist, zwischen denen sich das Hauptstück (18) der Klappe erstreckt, wobei die Klappe (16) mit mindestens einer elastischen Zunge (30) versehen ist, welche so angeordnet ist, dass sie gegen mindestens einen Kontaktbereich (31, 46) der ersten Wand (12) aufliegt und das Hauptstück (18) der Klappe in einer der von der elastischen Zunge auf den Kontaktbereich ausgeübten Kraft (F1, F2) entgegengesetzten Richtung (D1, D2) beansprucht, **dadurch gekennzeichnet, dass** die Wände (12, 14) von der Welle (20) der Klappe durchdrungen sind, wobei der Kontaktbereich (31, 46) der ersten Wand (12) Indexierungsmittel (42, 50) umfasst; welche geeignet sind, mit der elastischen Zunge (30) zusammenzuwirken, um die Klappe (16) in festgelegten winkeligen Stellungen zu halten.

2. Einrichtung nach Anspruch 1, **dadurch gekennzeichnet, dass** die elastische Zunge (30) derart angeordnet ist, dass sie gegen den Kontaktbereich (31) der ersten Wand (12) aufliegen kann und das Hauptstück (18) der Klappe in einer axialen Richtung (XX) gegen die zweite Wand (14) beansprucht.

3. Einrichtung nach Anspruch 1, **dadurch gekennzeichnet, dass** die elastische Zunge (30) derart angeordnet ist, dass sie gegen den Kontaktbereich (46) der ersten Wand (12) aufliegen kann und das Hauptstück (18) der Klappe in einer radialen Richtung (YY) beansprucht.

4. Einrichtung nach einem der Ansprüche 1 bis 3, **dadurch gekennzeichnet, dass** die elastische Zunge (30) einen sich zu der Welle (20) radial erstreckenden Arm (32) aufweist.

5. Einrichtung nach Anspruch 4, **dadurch gekennzeichnet, dass** der Arm (32) der elastischen Zunge (30) mit einem gebogenen Ende (34) versehen ist.

6. Einrichtung nach einem der Ansprüche 1 bis 5, **dadurch gekennzeichnet, dass** der Arm (32) mit einer an der Verbindungsstelle zwischen dem Hauptstück (18) und der Welle (20) der Klappe gebildeten Nabe (24) formschlüssig verbunden ist.

7. Einrichtung nach einem der Ansprüche 1 bis 6, **dadurch gekennzeichnet, dass** die elastische Zunge (30) mit der Klappe (16) aus einem einzigen Stück durch Formen eines Kunststoffes gebildet ist.

8. Einrichtung g nach einem der Ansprüche 1 bis 6, **dadurch gekennzeichnet, dass** die elastische Zunge mindestens teilweise mit der Klappe (16) aus einem einzigen Stück durch Formen eines Kunststoffes gebildet ist.

9. Einrichtung nach Anspruch 8, **dadurch gekennzeichnet, dass** die elastische Zunge (30) aus einem Teil, welcher mit der Klappe aus einem einzigen Teil gebildet ist und einem eingespritzten Teil (38) besteht.

10. Einrichtung nach den Ansprüchen 5 bis 9, als Kombinationen verstanden, **dadurch gekennzeichnet, dass** der eingespritzte Teil (38) das gebogene Ende (34) der Zunge umfasst.

11. Einrichtung nach einem der Ansprüche 1 bis 10, **dadurch gekennzeichnet, dass** das Hauptstück (18) der Klappe von einer Dichtung (22) umgeben ist, welche die Dichtheit mit der ersten Wand (12) und der zweiten Wand (14) gewährleistet.
